# EUROPEAN PATENT APPLICATION

(11) **EP 1 364 879 A2**
(43) Date of publication of application: **26.11.2003**
(21) Application number: 03011905.1
(22) Date of filing: 07.09.2001
(51) Int. Cl.: B65B 67/12, B65B 9/15, B65F 1/06, A47K 11/02

(54) **Apparatus for separately sealing a number of objects**

(30) Priority: 07.09.2000 DK 200001335
(62) Divisional of application: 01964947.4
(71) Applicant: Wessmann, Karl-Erik, 3360 Liseleje (DK)
(72) Inventor: Wessmann, Karl-Erik, 3360 Liseleje (DK)
(74) Representative: Holme, Edvard

(57) **Abstract**

An apparatus (1) serving for separately sealing a number of objects in a tubing (5) and temporarily storing the thus sealed objects and comprising a, seen in the state of use, upright container (2) having an upper aperture (4) and serving for accommodating the sealed objects, a rotatable magazine mounted in the container with a supply of tubing (5), means for retaining at least one sealed object against rotation when the magazine (3) is rotating during use. The apparatus comprises means for rotating the magazine without manually contacting the tubing, ensuring that the magazine can be rotated without having to use e.g. the fingers for holding the tubing.

## Description

The invention relates to an apparatus for separately sealing a number of objects in a tubing and temporarily storing the thus sealed objects and comprising a, seen in the state of use, upright container having an upper aperture and serving for accommodating the sealed objects, a rotatable magazine mounted in the container with a supply of tubing, and means for retaining at least one sealed object against rotation when the magazine is rotating during use.

Today, almost all families having children using nappies are using disposable nappies. But the disposable nappies also have the disadvantage that the used nappies have to be stored afterwards without causing hygienic problems or obnoxious smells.

The problem has been tried solved with apparatuses that serve to encapsulate nappies in separate packages along an endless plastic tubing so that the nappies are sealed in a non-smelling and hygienic manner.

Such an apparatus is for example described in the European Patent No. EP 0281355. The apparatus consists of a bucket with a hinged lid and a flap for emptying the bucket. In the top of the bucket is located a magazine with an endless plastic tubing which can be led across an edge of the magazine and down through a hole in the centre of the magazine. Before use, this hole is closed by a detachable lid which also comprises means for engaging with the plastic tubing. A nappy is introduced in the plastic tubing until it is retained by retaining members which are placed inside the bucket under the magazine. Then, the detachable lid is detached, placed in the opening and turned so that the plastic tubing is twisted and the nappy encapsulated in a separate package in the plastic tubing. By introducing a new nappy in the plastic tubing, this new nappy will push the first nappy further down, after which a new length of plastic tubing is drawn up of the magazine.

A user who has just changed a child's nappy will try to get the used nappy sealed as soon as possible partly to avoid unnecessary contamination partly to prevent odour nuisances. Normally, the user only has one arm free for the above operation as the other arm is used for preventing the child from falling down from e.g. a changing table. However, the apparatus described in EP 0281355 has the disadvantage that the user first has to remove the detachable lid from the apparatus with the free arm, stuff the used nappy so far down in the container that it can be retained by the retaining members, that is in this case relatively far down, take the detachable lid, make the lid engage with an area of the plastic tubing which is above the stuffed nappy, and finally turn the lid so that the tubing is constricted over the nappy. During this, the user has to perform all these operations with just one arm without at any time letting go of the child which is held with the other arm.

To an often busy family, this known apparatus is therefore rather difficult and time-consuming to use. There is furthermore a considerable risk that secretions will run down the sides of the containers in connection with the above-mentioned operations, then the sides will laboriously have to be washed down so as not to leave the container in an unacceptable, greasy, unhygienic state.

In addition to this, secretions from the nappy can easily be left on the tubing while the nappy is pushed down in the container, and these secretions could be transferred to the user's arms or clothes.

Said turning of the lid to constrict the tubing over the used nappy furthermore requires a concentrated and relatively great application of strength which many will have trouble in doing, especially people with weak hands and fingers.

With a view to solve the above problems, apparatuses have been developed that can seal nappies without use of a detachable lid. Such an apparatus is known from the European Patent No. EP 0699584.

In the top of this apparatus, a magazine with an endless plastic tubing is placed. A detachable funnel is attached to an inner tube in the magazine, and the plastic tubing is led from the magazine over the funnel and down through the inner tube of the magazine. The nappy is introduced in the plastic tubing via the funnel until it is retained by members placed inside the apparatus and under the magazine. Then, the magazine is turned by manually holding at the same time both the funnel and the plastic tubing with the fingers so that the plastic tubing is twisted and the nappy sealed in a separate package. When the magazine is empty, the funnel is taken off, after which the magazine can be replaced by a new magazine.

In this case, some of the problems of the difficult and time-consuming sealing process are solved as the funnel and magazine are now turned directly to thereby twist the plastic tubing and seal the nappy. However also in this case, it is necessary to push the nappy relatively far down in the container for it to be retained by the retaining members, and secretions from the nappy can easily be left on the user's arm or clothes during this.

In addition to this, the sealing of the nappy requires that the user with his or her fingers is holding directly on a part of the plastic tubing which can be contaminated by secretions which is unacceptable from a hygienic point of view.

Another problem of these known apparatuses is that their design is relatively complex and therefore costly, and that they comprise a large number of components which are subjected to wear which inevitably will require regular maintenance.

The object of the invention is to provide an apparatus of the kind mentioned in the opening paragraph, that has a simple, inexpensive design without components that gradually could become ineffective through wear, and where the user quickly and easily can seal an object without the user's arm thereby getting contaminated by secretions, and without having to clean the apparatus in this connection, and where the sealing furthermore is easily done even by persons with weak hands and fingers.

The novel and unique features according to the invention, whereby this is achieved, is the fact that the apparatus is comprising means for rotating the magazine without manually contacting the tubing.

Thereby, the apparatus obtains a simple, inexpensive design which is convenient and easy to operate. Upon use, the operator presses an object which is to be sealed in the tubing down through the upper aperture of the container. Then, by turning the magazine, the tubing is twisted together in an area just above the object which during this is retained against rotation by retaining means. The new object is now effectively sealed against leakage of e.g. odour without, as in conventional apparatuses of this kind, having to use the fingers or special means for holding the tubing during this. Thereby, the apparatus according to the invention will be easy, convenient and hygienic to operate.

When the retaining means are mainly designed as an open tube placed in the bed for passage of objects introduced at the top and successively sealed in the tubing, an especially simple, inexpensive design is obtained. At the same time, it is no longer necessary to push the object far down into the container as the tube is retaining the object against rotation at once while the tubing is twisted in an area just above the object. As the user does not have to push the object very far down into the container, the risk of secretions from the object being left on the user's arm or clothes is minimised.

The apparatus according to the invention is based on use of disposable magazines, that is magazines which are discarded when they have been emptied of tubing and which have to be replaced each time by a new magazine with a new tubing. These magazines are defined by the lower base, an interior and exterior ring-shaped wall, and in the upper area of the magazine, a guide disc serving for defining a chamber containing unused tubing.

When the exterior wall is designed with handles, the handles will invite to rotate the magazine with the fingers or hand when the tubing is to be twisted in an area just above an object. When the handles consist of an upper extension of the exterior wall, advantageously in form of a number of cuts, an especially simple solution is obtained which is easy and convenient to operate, especially to persons with weak hands and fingers.

When the guide disc advantageously is attached on the interior wall and extending outward at gap distance from the exterior wall, it is obtained that the tubing easily can be drawn up of the gap, across the outer periphery of the guide disc and from this across its upwardly facing face to the central aperture without the tubing during this getting in contact with the handles on the exterior wall. This design effectively ensures that the user during rotation of the magazine does not have to hold the tubing. Thereby, the user effectively avoids getting contaminated by waste substances from the object.

The carriers, which are mainly uniformly distributed along the outer periphery of the disc and serving for bringing along the plastic tubing when the magazine is rotated, can advantageously be designed as cuts and projections on the periphery. Having this design, it is not only obtained that the tubing is brought along but also that the tubing upon rotation of the magazine will be twisted symmetrically and evenly whereby the twist will be more dense, and the object is completely sealed in a non-smelling manner and without being able to transfer bacteria to the surroundings.

The invention will be explained in greater detail below, describing an only exemplary embodiment with reference to the drawing, in which
Fig. 1 is a front sectional view of a section of an apparatus according to the invention in a first position of use,
Fig. 2 is a perspective view seen obliquely from front of a magazine for the apparatus in fig. 1 in a first position of use,
Fig. 3 is a front sectional view of an apparatus according to the invention in a second position of use, and
Fig. 4 is a front sectional view of an apparatus according to the invention in a third position of use.

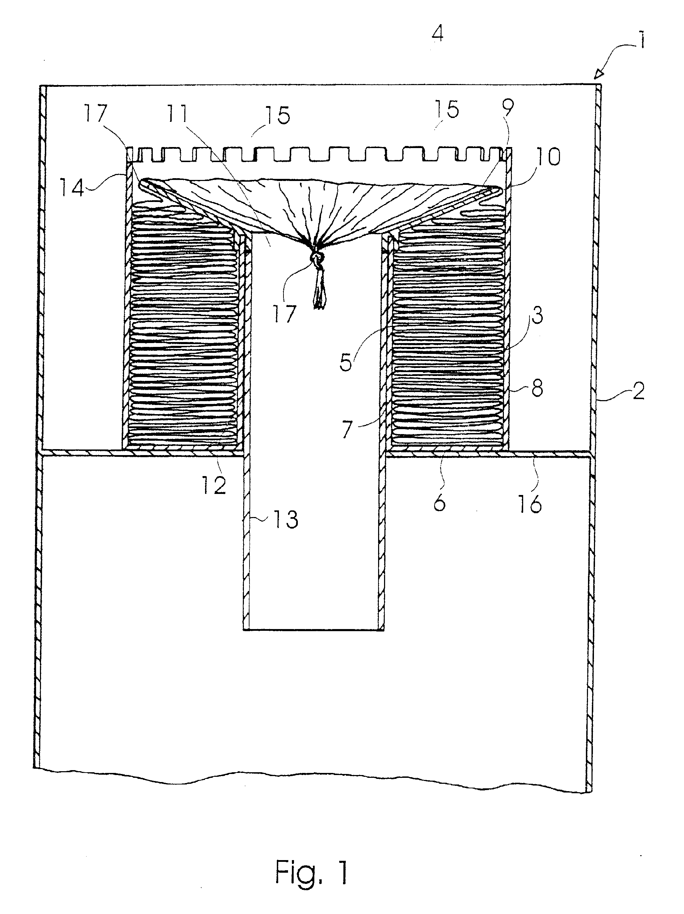

Fig. 1 is a section of an apparatus according to the invention designated generally by the reference numeral 1. The apparatus is preferably intended for being placed in a bathroom and/or rest room in e.g. a hotel, a restaurant or similar establishment. However, the apparatus can also be utilised in e.g. hospitals and a doctor's or dentist's clinic.

In the following, it is assumed that the objects desired sealed in the apparatus are disposable nappies but, within the scope of the invention, it can also be other kinds of objects such as sanitary towels, paper and cotton wool from dentists and doctors, or it can be a jumble of objects.

The main components of the apparatus are a container 2 and a magazine 3. The container has an upper aperture 4 serving for receiving the sealed objects.

The magazine 3 having a supply of tubing 5 has a lower bottom 6, an interior, ring-shaped wall 7, and an exterior, ring-shaped wall 8. On the interior wall 7 is placed a guide disc 9 extending outward in gap 10 from the wall 8 and having a central aperture 11. A person who wants to place an object, e.g. a nappy, in the container 2 can thus conveniently guide the tubing 5 from the magazine 3 across the outer periphery 17 of the disc at the gap 10 and from this disc across its upwardly facing face to the central aperture 11. Before the nappy can be placed in the tubing, the person has to close the tubing effectively by tying a knot 18 in the free end of the tubing.

The magazine is placed on a bed 12 in form of an open tube 13 extending down into the container 2. The open tube also serves for retaining objects against rotation while the tubing is twisted in an area just above the object.

On the exterior wall 8 of the magazine 3, an upper extension 14 is designed with a number of cuts 15 serving for rotating the magazine with the fingers or hand when the magazine is to be twisted in an area just above the object.

Under the bed for the magazine 3, a horizontally extending partition 16 is arranged in the container 2. The partition serves to naturally seal the container at the top but simultaneously functions as a supporting base to the magazine when this is placed on the bed.

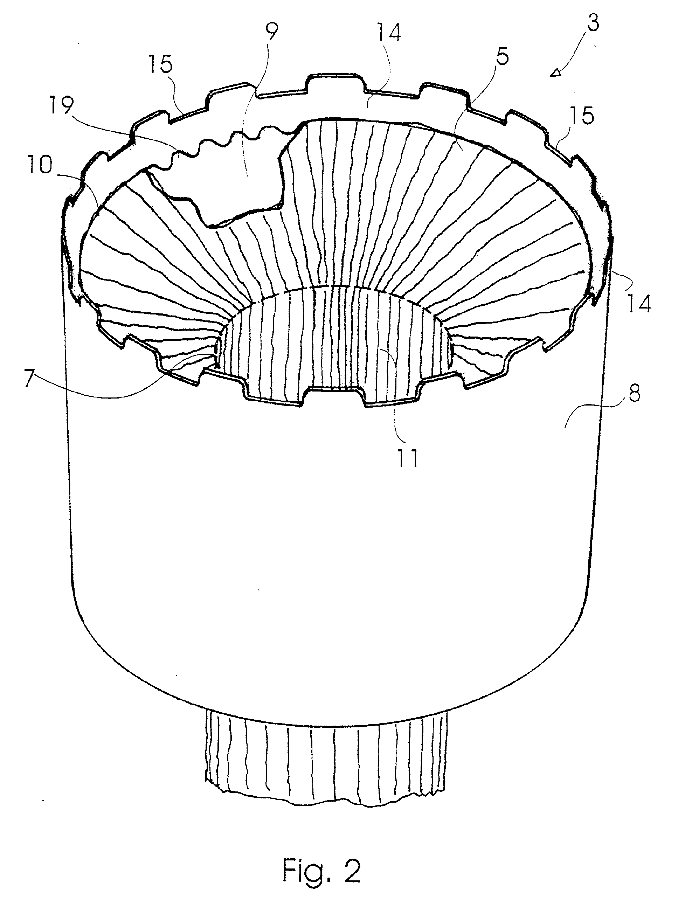

Fig. 2 is a perspective view of a magazine 3 according to the invention. On the outer periphery 17 of the guide disc, a number of carriers 19 are located that are made alternately as cuts and projections. When the magazine is rotated, the carriers will engage with the tubing 5 which is thereby rotated together with the magazine. The tubing is thereby given the rotation necessary for the twisting operation at the same time as the twist will be symmetrical and even which means that the twist will be very dense, and that the object therefore is sealed in a completely non-smelling and hygienic manner.

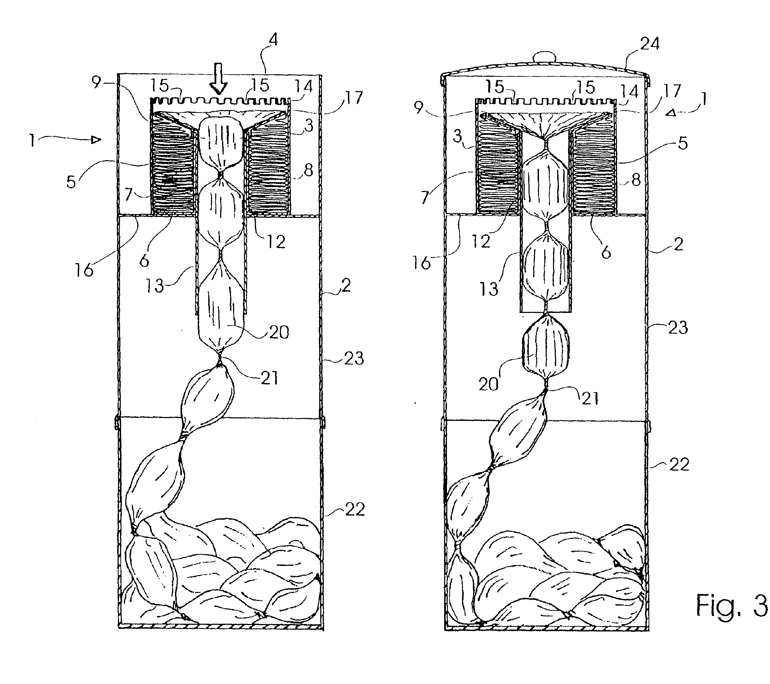

Fig. 3 is a horizontal cross section through the apparatus 1. It is seen that in the container 2 is a tubing 5 with nappies in separate packages 20 separated by twists 21. A person who wants to seal one more nappy in the container can conveniently place the nappy in the magazine in the direction indicated by the arrow and merely push the nappy so far down that it will just be free of the aperture 11 in the magazine at the same time as it is retained in the tube 13.

A new nappy which is pushed down into the tube 13 will push the previous nappy further down whereby new tubing 5 is drawn up of the magazine 3 across the outer periphery 17 of the disc at the gap 10, and from here across the upwardly facing face of the disc to its central aperture 11.

Then, the tubing 5 is twisted together in an area just above the object by rotating the magazine 3 so that a twist 21' is formed. This situation is shown in fig. 4, and the apparatus is now ready to receive the next nappy.

When tubing is led from the magazine, the tubing will enter the cuts formed on the periphery 17 of the guide disc 9. When the magazine is rotated, the tubing will therefore be brought along by the carriers of the disc whereby the tubing is given the rotation required to twist the tubing. As the carriers are uniformly distributed along the periphery of the disc, the tubing will be twisted in a pattern which is predetermined by the placing of the carriers along the periphery. This will result in the twist becoming completely dense and the non-smelling and hygienic encapsulation of the nappy.

Furthermore, it is not necessary, as with conventional apparatuses, to use special means or directly holding the tubing as the exterior tube 8 with the upper extension 14 presents a convenient, comfortable contact face to the person using the apparatus.

The user can thus grip around the upper extension 14 with his or her hand and place one or more fingers in the cuts 15 and by means of this solid handle easily rotate the magazine 3 without getting in contact with the tubing during this. The apparatus according to the invention will therefore be easy and hygienic to use even by persons with weak hands and fingers.

In figs. 3 and 4 are seen that the container 2 is divided into a lower, bucket-shaped part 22 and an upper part 23 which is open towards the bottom and detachably joined with the lower part during use. A lid 24 is furthermore part of the container and it fits both parts.

A user who is to empty the container of tubing 5 with e.g. nappies in separate packages first has to separate unused tubing in the magazine from used tubing. This can e.g. take place by clipping, cutting or tearing the tubing. Then, the user can separate the bucket-shaped part from the upper part quickly and easily. The tubing with used objects will now be placed in the lower part, and the user can seal the lower part by means of the lid so that the entire bucket-shaped part can be taken away. Used tubing with its content of e.g. nappies can now be immediately emptied into e.g. a waste bin without the user having to get in contact with the tubing during this.

## Claims

1. An apparatus (1) for separately sealing a number of objects in a tubing (5) and temporarily storing the thus sealed objects and comprising
- a, seen in the state of use, upright container (2) having an upper aperture (4) and serving for accommodating the sealed objects,
- a rotatable magazine mounted in the container with a supply of tubing (5),
- means for retaining at least one sealed object against rotation when the magazine (3) is rotating during use,
**characterised in that** the apparatus is comprising means for rotating the magazine without manually contacting the tubing.

2. An apparatus (1) according to claim 11, where the magazine is defined by a lower bottom (6) and an interior and exterior, ring-shaped wall (7,8), **characterised in that** the rotating means is at least one handle (14,15) designed on a exterior wall (8).

3. An apparatus (1) according to claim 11, **characterised in that** the retaining means is mainly designed as an open tube (13) placed in the bed (12) for passage of objects introduced at the top and successively sealed in the tubing (5).

4. A magazine for the apparatus according to claim 11, 12 or 13, **characterised in that** the magazine is comprising a guide disc (9) located on an upper area of the magazine and having a central aperture (11) for leading the tubing (5) from the magazine across the outer periphery (17) of the disc and from this across its upwardly facing face to the central aperture.
